**Europäisches Patentamt**

**European Patent Office**

**Office européen des brevets**

(19)

(11) Veröffentlichungsnummer: **0 069 108**

**B1**

(12) # EUROPÄISCHE PATENTSCHRIFT

(45) Veröffentlichungstag der Patentschrift:
15.10.86

(51) Int. Cl.⁴: **B 23 K 11/32**

(21) Anmeldenummer: **82890061.3**

(22) Anmeldetag: **29.04.82**

(54) **Verfahren und Vorrichtung zum Herstellen geschweisster Gittermatten.**

(30) Priorität: **14.05.81 AT 2158/81**

(43) Veröffentlichungstag der Anmeldung:
**05.01.83 Patentblatt 83/1**

(45) Bekanntmachung des Hinweises auf die Patenterteilung:
**15.10.86 Patentblatt 86/42**

(84) Benannte Vertragsstaaten:
**BE CH DE FR GB IT LI NL SE**

(56) Entgegenhaltungen:
**DE-A-2 843 324**
**FR-A-2 177 030**
**FR-A-2 336 994**
**US-A-3 879 908**
**US-A-4 340 802**

(73) Patentinhaber: **EVG Entwicklungs- u. Verwertungs-Gesellschaft m.b.H., Vinzenz- Muchitsch-Strasse 36, A-8011 Graz (AT)**

(72) Erfinder: **Schmidt, Gerhard, Dipl.- Ing., Rosengasse 7, A-8042 Graz (AT)**
Erfinder: **Ritter, Klaus, Dipl.- Ing., Peterstalstrasse 157, A-8042 Graz (AT)**
Erfinder: **Ritter, Gerhard, Dipl.- Ing. Dr., Unterer Plattenweg 47, A-8043 Graz (AT)**

(74) Vertreter: **Holzer, Walter, Dipl.- Ing., Patentanwälte Dipl.- Ing. Dr.techn. Schütz Alfred Dipl.- Ing. Dr.techn. Pfeifer Rudolf Dr.phil. Mrazek Engelbert Dipl.- Ing. Holzer Walter Dipl.- Ing. Pfeifer Otto, Fleischmanngasse 9 A-1040 Wien (AT)**

## Beschreibung

Die Erfindung betrifft ein Verfahren und eine Vorrichtung zum Herstellen geschweißter Gittermatten, die aus zwei parallelen, ebenen Gitterbahnen aus einander kreuzenden und an den Kreuzungspunkten verschweißten Längs- und Querdrähten und aus die Gitterbahnen in einem vorgegebenen gegenseitigen Abstand haltenden, an jedem Ende mit einem Draht einer der beiden Gitterbahnen verschweißten, abgelängten geraden Stegdrähten bestehen.

Räumliche Gitterkörper dieser Gattung dienen hauptsächlich als Bewehrung für Verbund-Bauelemente, wobei die Stegdrähte der Gittermatte einen wärmeisolierenden Isolierkern abstützen und die beiderseits dieses Kernes vorstehenden Gitterbahnen Tragteile und Flächenbewehrungen für Außenschalen aus Beton bilden. Ferner können solche räumlichen Gittermatten, wenn sie hinreichend scherungssteif ausgebildet werden, auch als rostartige, gegebenenfalls begehbare Tragwerke Anwendung finden.

Ein Verfahren zum Herstellen von räumlichen Gittermatten der einleitend geschilderten Gattung ist aus der DE—A2—23 14 002 bekannt. Nach dem bekannten Verfahren werden zu Rollen aufgewickelte Flachgitterstreifen von den Rollen abgezogen, geradegerichtet, um 90° in Hochkantlage verdreht und parallel zueinander einer Schweißstation zugeführt, in welcher an die nun oben bzw. unten liegenden parallelen Längsdrähte der Flachgitterstreifen diese Längsdrähte in rechtem Winkel kreuzende Querdrähte angeschweißt werden. Diese Querdrähte bilden mit den Längsdrähten der Flachgitterstreifen Gittermatten, welche durch die zwischen den Längsdrähten der hochkant stehenden Flachgitterstreifen verlaufenden Stegdrähte in gegenseitigem Abstand gehalten werden.

Bei Anwendung dieses relativ umständlichen und zeitraubenden Herstellungsverfahrens für den Gitterkörper kann in diesen nur im nachhinein, nämlich in einer besonderen Kernbildungsstation, ein Isolierkern eingebracht werden. Das kann entweder dadurch geschehen, daß der Gitterkörper zu einem geringen Teil seiner Dicke in ein Sandbett eingebettet wird, worauf Polyurethanschaum od.dgl. auf das Sandbett aufgeschäumt und erstarren gelassen wird, oder auch dadurch, daß eine Platte aus Styropor od.dgl. mit entsprechenden Abmessungen in Streifen geschnitten wird, deren Breite dem Abstand paralleler Flachgitterstreifen im Gitterkörper entspricht, und diese Streifen dann einzeln in die Zwischenräume zwischen den Flachgitterstreifen eingeschoben werden. Abgesehen davon, daß zum Einbringen des Isolierkernes in beiden Fällen gesonderte Arbeitsgänge erforderlich sind, sind diese Arbeitsgänge überdies auch noch in jedem der beiden Fälle äußerst zeitraubend.

Die Erfindung befaßt sich mit der Aufgabe, ein Verfahren zum Herstellen einer räumlichen Gittermatte der einleitend angegebenen Gattung zu Schaffen, das es ermöglicht, auf wesentlich rationellere Weise als bisher entweder kernlose Gittermatten für rostartige Tragwerke od.dgl. oder durch eine weitere Ausgestaltung auch Gittermatten mit einem Isolierkern herzustellen, die als vorfabrizierte Verbund-Bauelemente verwendbar sind.

In beiden Fällen erfolgt die Herstellung der Gittermatte erfindungsgemäß in der Weise, daß zwei Gitterbahnen schrittweise von Vorratsspulen abgezogen, geradegerichtet und in einem der gewünschten Dicke der Gittermatte entsprechenden gegenseitigen Abstand in parallele Lage gebracht werden und daß gleichzeitig mehrere Drähte schrittweise von Vorratsspulen abgezogen, geradegerichtet und als Stegdrähte von der Seite her durch eine der beiden Gitterbahnen derart in den Zwischenraum zwischen den Gitterbahnen eingeführt werden, daß jeder Stegdraht nahe einem Gitterdraht beider Gitterbahnen zu liegen kommt, worauf die Stegdrähte mit den benachbarten Gitterdrähten verschweißt und vom Drahtvorrat abgetrennt werden, und schließlich nach Erzeugung eines Gitterkörpers gewünschter Länge eine Gittermatte entsprechender Länge von dem Gitterkörper abgetrennt wird.

Die geschilderte Verfahrensweise, bei welcher von vorgefertigten, aufgewickelten Gitterbahnen und aufgespulten Drahtvorräten für die Stegdrähte ausgegangen wird, ermöglicht eine sehr rationelle, kontinuierliche Herstellung des Gitterkörpers, zumal im Rhythmus der Produktionsschritte nur kurze Drahtabschnitte vorgeschoben, abgelängt und mit den Gitterbahnen verschweißt werden müssen, so daß eine hohe Produktionsgeschwindigkeit eingehalten werden kann.

Die Steifigkeit des Gitterkörpers kann erhöht werden, indem die Stegdrähte alternierend gegensinnig schräg in senkrecht zu den Ebenen der Gitterbahnen verlaufenden Ebenen, in welchen eine Versteifung des Gitterkörpers erwünscht ist, in den Zwischenraum zwischen den Gitterbahnen eingeführt und in dieser Schräglage mit den Gitterbahnen verschweißt werden. Eine allseitige Schersteifigkeit ist insbesondere bei Verwendung der Gittermatte als rostartiges Tragwerk erforderlich.

Zur Herstellung von Bauelementen mit einem Isolierkern wird erfindungsgemäß in den Zwischenraum zwischen den beiden parallelen Gitterbahnen und mit Abstand von jeder Gitterbahn eine Platte aus wärmeisolierendem Material eingeführt, wobei die freien Enden der Stegdrähte beim Einführen derselben in den Zwischenraum zwischen den Gitterbahnen durch diese Platte hindurchgestoßen werden. Zweckmäßig werden bei Verwendung eines Isolierkernes aus thermoplastischem Material zumindest die vorderen Endteile der Stegdrähte vor dem Hindurchstoßen durch die Platte aus wärmeisolierendem Material erhitzt.

Zur Durchführung des erfindungsgemäßen Verfahrens kann nach der weiteren Erfindung vorteilhaft eine Vorrichtung verwendet werden, die gekennzeichnet ist durch zwei zu beiden Seiten eines Produktionskanales für den Gitterkörper angeordnete Gitterbahn-Vorratsspulen mit nachgeschalteten Richtvorrichtungen, hinter welchen tangential in gegenüberliegende Längsseiten des Produktionskanales einmündende gekrümmte Leitvorrichtungen für die Gitterbahnen angeordnet sind, sowie durch zumindest eine seitlich des Produktionskanales angeordnete Gruppe von Stegdraht-Vorratsspulen, von welchen Drahtvorschubwege über Richtvorrichtungen und schrittweise arbeitende, mit Scheren kombinierte Drahtvorschubeinrichtungen quer durch den Produktionskanal verlaufen, wobei jenseits des Produktionskanales, eingefluchtet mit den Drahtvorschubwegen, Schweißzangen für die Verschweißung der freien Drahtenden mit der einen Gitterbahn und diesseits des Produktionskanales, in Produktionsrichtung hinter den mit den Scheren kombinierten Vorschubeinrichtungen Schweißzangen zum Anschweißen der Schnittenden der von den Scheren abgelängten Drähte an die andere Gitterbahn und schließlich in Produktionsrichtung hinter den Schweißzangen Längsdrahtscheren zum Abtrennen von Gittermatten gewünschter Länge von dem Gitterkörper vorgesehen sind.

Die vorstehend geschilderten und weitere Merkmale der Erfindung werden nachfolgend unter Bezugnahme auf die Zeichnungen genauer erläutert. Es zeigt.

Figur 1 eine schematische Draufsicht einer erfindungsgemäßen Vorrichtung;

Figuren 2 und 3 Ausführungsbeispiele für die Stegdraht-Vorschubeinrichtungen;

Figur 4 ein Ausführungsbeispiel der Schweißzangen;

Figur 5 ein Ausführungsbeispiel einer Vorschubeinrichtung für den Gitterkörper;

Figur 6 ein Ausführungsbeispiel einer Besäumschere zum Beseitigen von Stegdrahtüberständen und

Figuren 7 und 8 in zwei zueinander senkrechten Ansichten eine Schere zum Ablängen der Gittermatte.

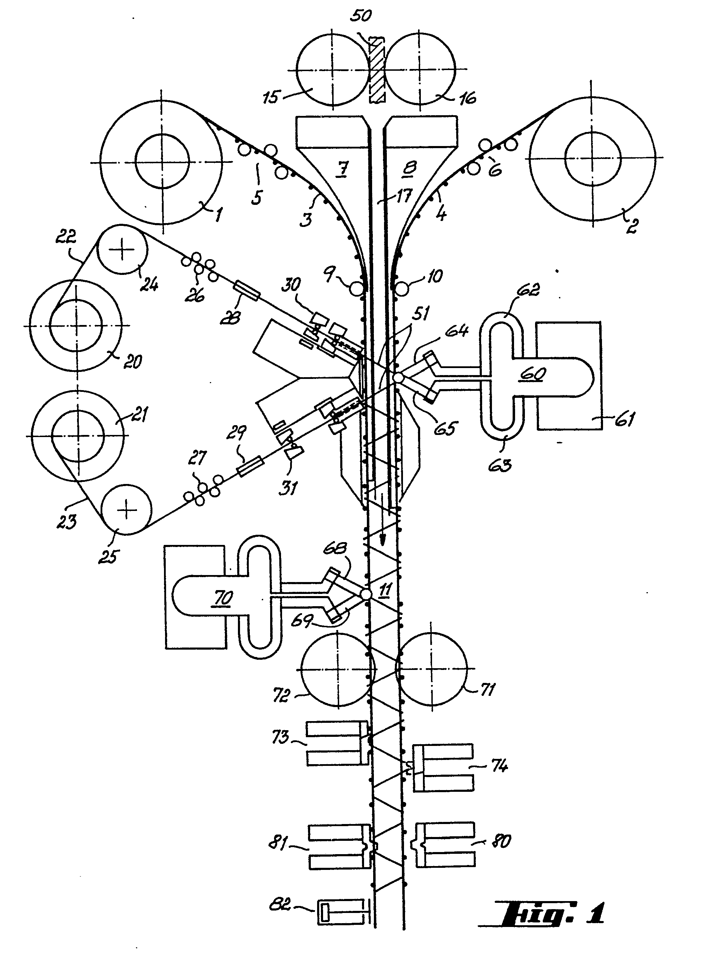

Von der erfindungsgemäßen Vorrichtung zum Herstellen von räumlichen Gittermatten sind in der schematischen Draufsicht nach Figur 1 der Übersichtlichkeit halber nur die verschiedenen, längs eines durch einen Pfeil hervorgehobenen Produktionskanales 11 angeordneten Funktionselemente, nicht aber deren Abstützung am Maschinenständer dargestellt. Gemäß Figur 1 werden von zwei Vorratsspulen 1 und 2 Gitterbahnen 3, 4 abgezogen, die zunächst Richtvorrichtungen 5 bzw. 6 passieren, in welchen sie geradegerichtet werden. Mit Hilfe schwach gekrümmter, die eingeebneten Gitterbahnen nur elastisch deformierender Leitvorrichtungen 7, 8 und anschließender Führungsrollen 9, 10 werden die Gitterbahnen 3 und 4 in paralleler Lage in den Produktionskanal 11 geleitet, wo ihr gegenseitiger Abstand der gewünschten Dicke des herzustellenden räumlichen Gitterkörpers entspricht.

Die Gitterbahnen 3, 4 durchlaufen sodann eine Schweißstation, in welcher, wie noch genauer erläutert wird, kurze, gerade, den Zwischenraum zwischen den beiden Gitterbahnen durchsetzende Stegdrähte eingefürt und zunächst mit einer der beiden Gitterbahnen verschweißt werden.

Zwei Vorschubwalzen 15, 16 können, wenn erforderlich, einen langen, plattenförmigen Isolierkern, beispielsweise eine Styroporplatte, durch Reibungsschluß erfassen und durch einen zu deisem Zweck zwischen den Leitvorrichtungen 7 und 8 gebildeten Zuführungskanal 17 vorschieben, so daß er in der Schweißstation parallel zu den Gitterbahnen 3, 4 und mit beidseitigem Abstand von diesen zu liegen kommt.

Im Bereich der Schweißstation, jedoch mit Abstand von dieser, sind in Richtung senkrecht zur Zeichenebene von Figur 1 hintereinander Vorratsspulen 20, 21 für Stegdrähte angeordnet. Die von den Vorratsspulen 20, 21 abgezogenen Drähte 22, 23 laufen über Umlenkrollen 24, 25 zu Richtvorrichtungen 26, 27, gegebenenfalls durch Heizeinrichtungen 28, 29 und gelangen zu gleich ausgebildeten Vorschubeinrichtungen 30, 31, welche die Drähte im Arbeitstakt der Maschine von den Vorratsspulen 20, 21 abziehen und in die Schweißstation vorschieben.

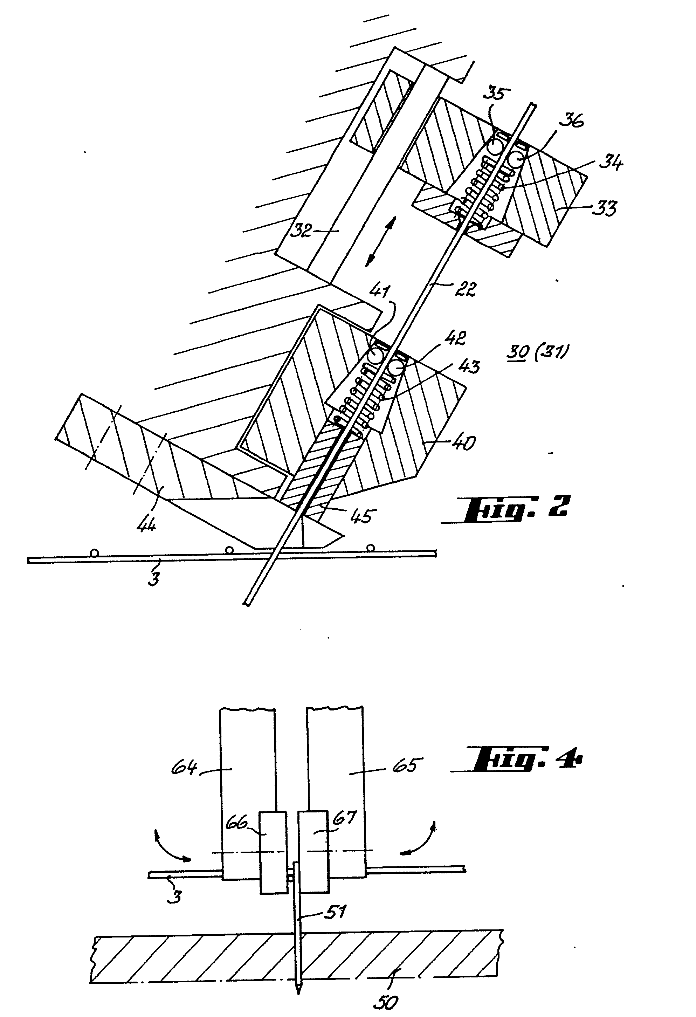

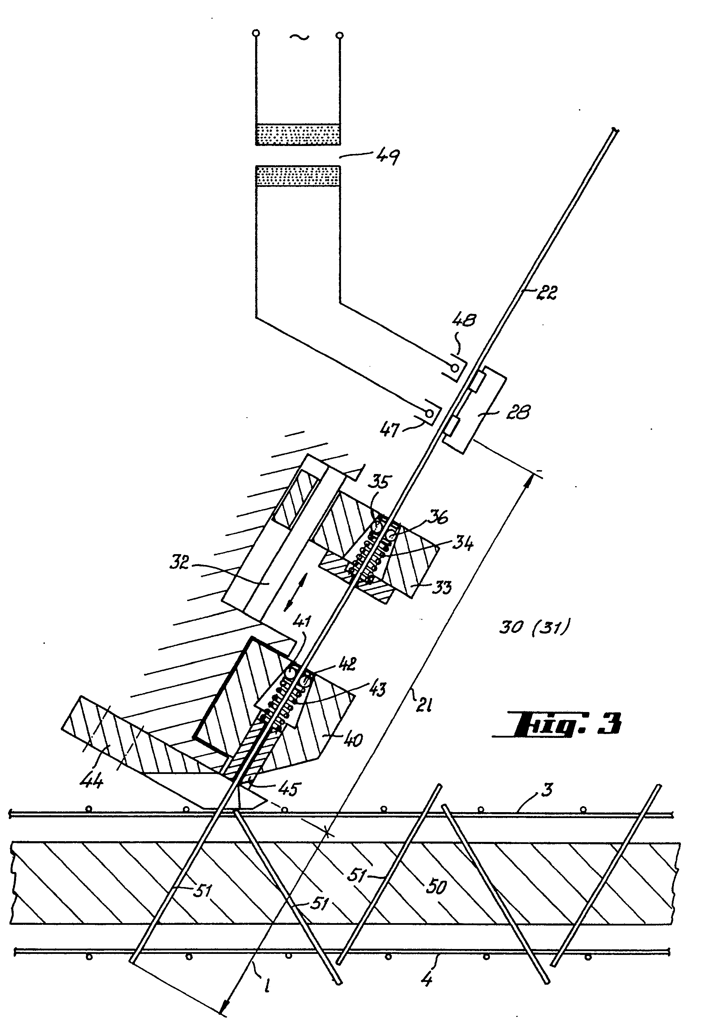

Jede der in den Figuren 2 und 3 als Ausführungsbeispiel im Detail dargestellten Vorschubeinrichtungen 30, 31 weist eine durch bekannte Mittel, beispielsweise hydraulische Kolben, längs einer Führungsschiene 32 hin- und herschiebbare Vorschubklemme 33 auf, in deren konischer Bohrung Klemmkugeln 35, 36 (oder Klemmwalzen) gelagert sind, die durch eine Feder 34 belastet sind. Mit der Vorschubklemme 33 wirkt eine Rücklaufsperre 40 zusammen, welche gleichfalls in einer konischen Bohrung gelagerte, durch eine Feder 43 belastete Klemmkugeln 41, 42 (oder Klemmwalzen) aufweist. Ein mit einer Schneidkante an einer Austrittsführung 45 der Rücklaufsperre 40 scherenartig zusammenwirkendes Messer 44 zum Abschneiden des vorgeschobenen Drahtes 22 vervollständigt die Vorschubeinrichtung 30. Das Messer 44 kann aus einem sich über die Maschinenbreite erstreckendem Balken bestehen, der einzelne Schlitze für den Durchtritt der Drähte 22 aufweist. Der Schnitt erfolgt für alle vom Messer 44 erfaßten Drähte gleichzeitig durch Seitwärtsbewegen des Messers.

Die Vorschubeinrichtung nach Figur 3 unterscheidet sich von jener nach Figur 2 nur durch das Vorhandensein einer Heizeinrichtung 28. Diese Heizeinrichtung besteht aus zwei Elektroden 47, 48, die von einem Transformator 49 angespeist werden und einen elektrischen Stromfluß in einem kurzen Drahtabschnitt bewirken, der auf diese Weise stark erhitzt wird.

Die Wirkungsweise dieser Vorschubeinrichtung ist folgende:

Bei der Bewegung der Vorschubklemme 33 in Richtung zur Rücklaufsperre 40 werden die Klemmkugeln 35, 36 durch die Wandung der sie aufnehmenden konischen Bohrung noch zusätzlich zur Wirkung der Feder 34 an den Draht 22 angepreßt und nehmen den Draht 22 mit. Dadurch wird der Draht von den Vorratsspulen 20, 21 ab- und durch die Richtvorrichtung 26, 27 hindurchgezogen. Der vor der Vorschubklemme 33 liegende Drahtabschnitt schiebt die Klemmkugeln 41, 42 der Rücklaufsperre 40 in Richtung zur Feder 43 und zum verbreiterten Ende der konischen Bohrung. Die Klemmkugeln 41, 42 setzen daher dieser Bewegung des Drahtes 22 praktisch keinen Widerstand entgegen. Die Bewegung wird solange fortgesetzt, bis das vordere Drahtende den gesamten von den Gitterbahnen 3, 4 begrenzten Raum durchsetzt hat.

Befindet sich im Raum zwischen den Gitterbahnen 3, 4 eine Platte 50 aus wärmeisolierendem Material, etwa aus Styropor, Polyurethan od.dgl., so wird diese vom jeweils vordersten Abschnitt 51 der Stegdrähte 22, 23 wie von einem Nagel durchstoßen. Versuche haben gezeigt, daß das Durchstoßen des Isolierkerns 50 durch Erhitzen zumindest der Drahtspitze wesentlich erleichtert wird. Diesem zweck dient die Heizeinrichtung 28, die im Abstand 21 vom Ende der Austrittsführung 45 zugeordnet ist, wobei 1 die bei einem vorschubschritt zurückgelegte Weglänge des Drahtes 22, 23 ist.

Sobald der vorgeschobene Drahtabschnitt 51 mittels des Messers 44 abgetrennt worden ist, kehrt die Vorschubklemme 33 in ihre Ausgangslage zurück, wobei nun die Klemmkugeln 41, 42 den Stegdraht 22, 23 in seiner Lage festhalten, die Klemmkugeln 35, 36 ihn jedoch freigeben.

Den Vorschubeinrichtungen 30, 31 gegenüber liegt eine Schweißeinrichtung 60, welche die jeweils vorgeschobenen Abschnitte 51 der Stegdrähte 22, 23 mit der Gitterbahn 4 verbindet.

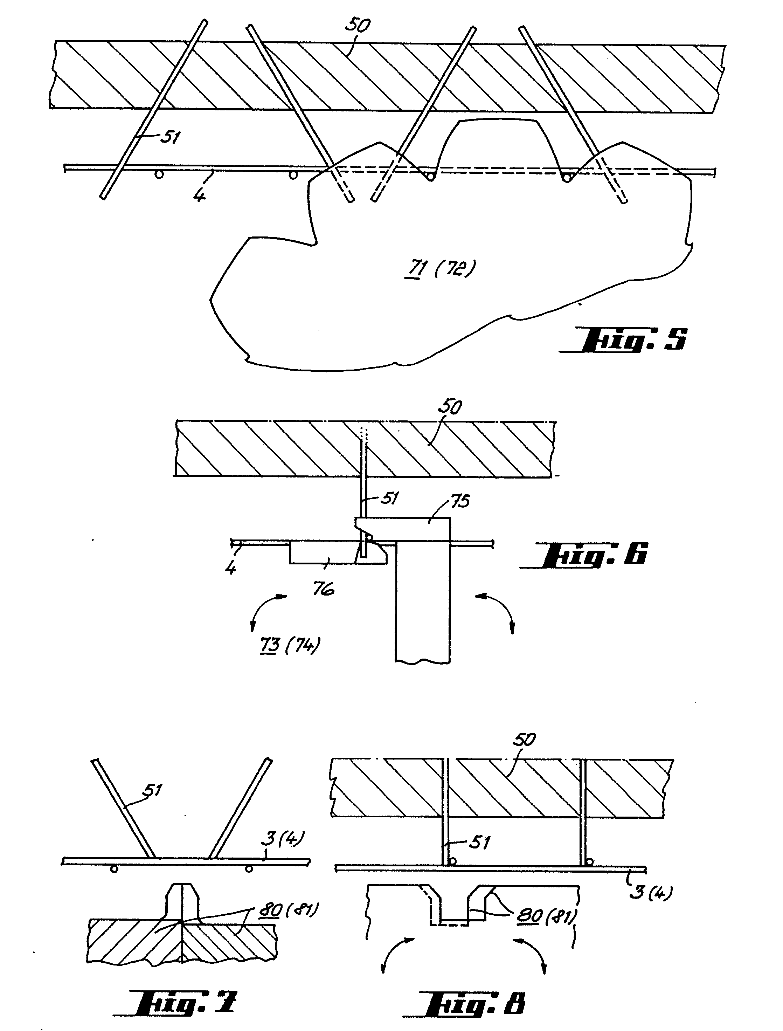

Die Schweißeinrichtung 60 besteht aus einem Transformator 61, biegsamen Zuleitungen 62, 63, welche die Sekundärausgänge des Transformators mit den Elektrodenhaltern 64, 65 gemäß Figur 4 verbinden, und den Elektroden 66, 67. Wie in Figur 4 durch Pfeile angedeutet ist, bilden die Elektrodenhalter 64, 65 die Backen einer Schweißzange, die in die Gitterbahnebene eingeschwenkt werden kann, um einen Drahtabschnitt 51 an einen Gitterdraht anzuschweißen, bzw. wieder aus der Gitterbahnebene herausgeschwenkt werden kann, um den Gitterkörper für den Weitertransport freizugeben.

Schließlich verbindet eine in Vorschubrichtung des herzustellenden Gitterkörpers weiter stromabwärts liegende, mit Schweißzangen 68, 69 ausgestattete Schweißeinrichtung 70, deren Aufbau völlig gleich jenem der eben geschilderten Schweißeinrichtung 60 ist, die Schnittenden der Drahtabschnitte 51 mit der Gitterbahn 3. Der gegenseitige Abstand der beiden Schweißeinrichtungen 60 und 70 ist so gewählt, daß beide Schweißeinrichtungen gleichzeitig die nahe benachbart liegenden Enden von zwei gegensinnig schräg, also V-förmig angeordneten Drahtabschnitten 51 erfassen und mit den zugeordneten Gitterbahnen verschweißen können.

Der Gitterkörper wird von zwei in die Gitterbahnen 3 bzw. 4 eingreifenden Zahnscheiben 71, 72 transportiert, welche gemäß Figur 5 die Gitterbahnquerdrähte kraftschlüssig erfassen. Die Zahnscheiben werden intermittierend angetrieben, ziehen den Gitterkörper um einen Betrag, der dem gewünschten gegenseitigen Abstand benachbarter V-förmig angeordneter Drahtabschnitte 51 entspricht, vor und bleiben anschließend solange stehen, bis das Zuführen neuer Drahtabschnitte und deren Verschweißung mit den Gitterbahnen vollzogen ist, worauf ein nächster Vorschubschritt erfolgt.

Die Überstände der Drahtabschnitte 51 werden durch Besäumscheren 73, 74 abgeschnitten. Jede Besäumschere 73, 74 besteht gemäß Figur 6 aus zwei Backen 75, 76, die im Sinne der Pfeile in Figur 6 schwenkbar gelagert sind. Während die Backe 75 ein Widerlager für einen Draht einer Gitterbahn bildet, wirkt die Backe 76 als Messer, das den Überstand des Drahtabschnittes 51 in Richtung auf den von der Backe 75 festgehaltenen Gitterbahndraht hin abschert.

Schließlich sind noch Längsdrahtscheren 80, 81 vorgesehen, die von außen her in den Gitterkörper einschiebbar sind. Figur 7 zeigt eine dieser Scheren schematisch in Ruhestellung in Blickrichtung parallel zu den Querdrähten der Gitterbahn 3 oder 4, Figur 8 die gleiche Schere in Blickrichtung parallel zu den Gitterbahnlängsdrähten. Die beiden Scherenmesser sind im Sinne der Pfeile in Figur 8 gegeneinander bewegbar ausgebildet, um die Längsdrähte der Gitterbahn 3 bzw. 4 zu durchtrennen und dadurch Abschnitte gewünschter Länge vom Gitterkörper abzutrennen.

Schließlich sind noch Arbeitszylinder 82 vorgesehen, mit deren Hilfe abgelängte Gitterkörperabschnitte seitlich aus der Vorschubbahn der Maschine weggeschoben werden können, um die Auslaufbahn des Produktionskanals für neu zu fertigende Gitterkörperabschnitte freizumachen.

Sowohl die Vorschubeinrichtungen 30, 31 mit allem ihrem Zubehör, wie Vorratsspulen 20, 21, Umlenkrollen 24, 25 usw. als auch die Schweißeinrichtungen 60, 70 und die Besäumscheren 73, 74 sind in Richtung senkrecht zur Zeichenebene in Figur 1 in so vielfacher Ausführung in einer Flucht hintereinander vorgesehen, als Paare von Drahtabschnitten 51 in einer Flucht hintereinander zwischen die Gitterbahnen 3, 4 eingeschweißt werden sollen. Ebenso sind auch die Längsdrahtscheren 80, 81 in vielfältiger Ausführung in einer Flucht hintereinander senkrecht zur Zeichenebene von Figur 1 vorzusehen, und zwar für jeden Gitterbahnlängsdraht jeder der beiden Gitterbahnen jeweils eine Längsdrahtschere.

Wenn zumindest die auf einer Seite des Zuführungskanals für den Isolierkern und des Produktionskanals in Kanalnähe angeordneten Vorrichtungsteile, wie beispielsweise eine Leit- und Führungsvorrichtung für die eine Gitterbahn, eine Vorschubrolle für den Isolierkern, eine Stegdraht-Schweißeinrichtung, eine Vorschubeinrichtung für den Gitterkörper, eine Besäumschere für diesen und eine Gitterbahn-Langsdrahtschere, gemeinsam senkrecht zur Längsmittelebene des Produktionskanals verstellbar sind, was etwa durch Anordnung aller dieser Vorrichtungsteile auf einem verschiebbaren Support ermöglicht wird, so kann auf einfache Weise die Dicke des herzustellenden Gitterkörpers geändert werden.

Die Richtung, in welcher die Drahtabschnitte 51 in den Zwischenraum zwischen den beiden Gitterbahnen 3, 4 eingeführt werden, ist in weiten Grenzen frei wählbar. Vorzugsweise werden, wie in Figur 1 dargestellt, die Stegdrähte in gegensinnigen schrägen Richtungen vorgeschoben, wobei die Schräglage auf die Längsmittelebene und/oder die Querebene des Produktionskanales bezogen werden kann und nur die Voraussetzung besteht, daß die schrägen Drähte sowohl nahe einem Längs- oder Querdraht der Gitterbahn 3 als auch nahe einem Längs- oder Querdraht der Gitterbahn 4 zu liegen kommen, so daß die Stegdrahtenden mit den betreffenden Gitterbahndrähten verschweißt werden können.

Bei einer Änderung der Dicke des herzustellenden Gitterkörpers muß natürlich auch die Winkellage der Vorschubeinrichtung für die Stegdrähte gleichzeitig mit der Verschiebung der zugeordneten Stegdraht-Schweißeinrichtung verändert werden; gegebenenfalls wird auch eine Änderung der Länge der Vorschubwege für die Stegdrähte erforderlich sein, damit nicht zu große Stegdrahtüberstände anfallen.

Die divergierenden Stegdrähte versteifen den Gitterkörper gegen Scherbeanspruchungen und können einen von ihnen durchsetzten Isolierkernabschnitt bezüglich der beiden vorstehenden Gitterbahnen unverschieblich festhalten.

## Patentansprüche

1. Verfahren zum Herstellen geschweißter Gittermatten, die aus zwei parallelen, ebenen Gitterbahnen (3, 4) aus einander kreuzenden und an den Kreuzungspunkten verschweißten Längs- und Querdrähten und aus die Gitterbahnen in einem vorgegebenen gegenseitigen Abstand haltenden, an jedem Ende mit einem Draht einer der beiden Gitterbahnen verschweißten, abgelängten geraden Stegdrähten (22, 23) bestehen, dadurch gekennzeichnet, daß zwei Gitterbahnen (3, 4) schrittweise von Vorratsspulen (1, 2) abgezogen, geradegerichtet und in einem der gewünschten Dicke der Gittermatte entsprechenden gegenseitigen Abstand in parallele Lage gebracht werden und daß gleichzeitig mehrere Drähte (22, 23) schrittweise von Vorratsspulen (20, 21) abgezogen, geradegerichtet und als Stegdrähte von der Seite her durch eine (3) der beiden Gitterbahnen (3, 4) derart in den Zwischenraum zwischen den Gitterbahnen eingeführt werden, daß jeder Stegdraht nahe einem Gitterdraht beider Gitterbahnen (3, 4) zu liegen kommt, worauf die Stegdrähte mit den benachbarten Gitterdrähten verschweißt und vom Drahtvorrat abgetrennt werden, und schließlich nach Erzeugung eines Gitterkörpers eine Gittermatte entsprechender Länge von dem Gitterkörper abgetrennt wird.

2. Verfahren nach Patentanspruch 1, dadurch gekennzeichnet, daß die Stegdrähte (22, 23) alternierend gegensinnig schräg in senkrecht zu den Ebenen der Gitterbahnen (3, 4) verlaufenden Ebenen, in welchen eine Versteifung des Gitterkörpers erwünscht ist, in den Zwischenraum zwischen den Gitterbahnen (3, 4) eingeführt und in deiser Schräglage mit den Gitterbahnen verschweißt werden.

3. Verfahren nach Patentanspruch 1 oder 2, dadurch gekennzeichnet, daß in den Zwischenraum zwischen den beiden parallelen Gitterbahnen (3, 4) und mit Abstand von jeder Gitterbahn eine Platte (50) aus wärmeisolierendem Material eingeführt wird, wobei die freien Endabschnitte (51) der Stegdrähte (22, 23) beim Einführen derselben in den Zwischenraum (11) zwischen den Gitterbahnen durch diese Platte (50) hindurchgeführt werden.

4. Verfahren nach Patentanspruch 3, dadurch gekennzeichnet, daß zumindest die vorderen Endteile (51) der Stegdrähte (22, 23) vor dem Hindurchführen durch die Platte (50) aus wärmeisolierendem Material erhitzt werden.

5. Vorrichtung zur Durchführung des Verfahrens nach Patentanspruch 1, gekennzeichnet durch zwei zu beiden Seiten eines Produktionskanales (11) für den Gitterkörper angeordnete Gitterbahn-Vorratsspulen (1, 2) mit nachgeschalteten Richtvorrichtungen (5, 6), hinter welchen tangential in gegenüberliegende Längsseiten des Produktionskanales (11) einmündende gekrümmte Leitvorrichtungen (7, 8) für die Gitterbahnen (3, 4) angeordnet sind, sowie durch zumindest eine seitlich des Produktionskanales (11) angeordnete Gruppe von Stegdraht-Vorratsspulen (20, 21), von welchen Drahtvorschubwege über Richtvorrichtungen (26, 27) und schrittweise arbeitende, mit Scheren (44, 45) kombinierte Drahtvorschubeinrichtungen (30, 31) quer durch den Produktionskanal (11) verlaufen, wobei jenseits des Produktionskanales, eingefluchtet mit den Drahtvorschubwegen, Schweißzangen (64, 65) für die Verschweißung der freien Drahtenden mit der einen Gitterbahn (4) und diesseits des Produktionskanales, in Produktionsrichtung hinter den mit den Scheren (44, 45) kombinierten Vorschubeinrichtungen (30, 31) Schweißzangen (68, 69) zum Anschweißen der Schnittenden der von den Scheren (44, 45) abgelängten Drähte an die andere Gitterbahn (3) und schließlich in Produktionsrichtung hinter den Schweißzangen (68, 69) Längsdrahtscheren (80, 81) zum Abtrennen von Gittermatten gewünschter Länge von dem Gitterkörper vorgesehen sind.

6. Vorrichtung nach Patentanspruch 5, dadurch gekennzeichnet, daß zwei Gruppen von Stegdraht-Vorratsspulen (20, 21) vorgesehen sind, von welchen gegensinnig schräg zur Längsmittelebene und/oder Querebene des Produktionskanales (11) verlaufende Stegdraht-Vorschubwege, vorzugsweise von der gleichen Seite des Produktionskanales her, in den Produktionskanal verlaufen.

7. Vorrichtung nach Patentanspruch 5 oder 6 zur Durchführung des Verfahrens nach Patentanspruch 3, dadurch gekennzeichnet, daß zwischen den Leitvorrichtungen (7, 8) für die Gitterbahnen ein Zuführungskanal (17) für einen Isolierkern (50) vorgesehen ist, wobei vor diesem Kanal vorzugsweise Vorschubwalzen (15, 16) angeordnet sind.

8. Vorrichtung nach Patentanspruch 7, dadurch gekennzeichnet, daß auf den Stegdraht-Vorschubwegen Heizeinrichtungen (28, 29) vorgesehen sind.

9. Vorrichtung nach einem der Patentansprüche 5 bis 8, dadurch gekennzeichnet, daß zumindest die auf einer Seite des Zuführungskanals (17) und des Produktionskanals (11) in deren Nähe angeordneten Vorrichtungsteile, beispielsweise eine Leit- und Führungsvorrichtung (8, 10) für die eine Gitterbahn (4), eine Vorschubrolle (16) für einen Isolierkern (50), eine Stegdraht-Schweißeinrichtung (60), eine Vorschubeinrichtung (71) für den Gitterkörper, eine Besäumschere (74) für diesen und eine Gitterbahn-Längsdrahtschere (80), gemeinsam, etwa mittels eines Supports, senkrecht zur Längsmittelebene des Produktionskanals (11) verstellbar sind.

10. Vorrichtung nach den Patentansprüchen 6 und 9, dadurch gekennzeichnet, daß die Winkellagen der Vorschubeinrichtungen (30, 31) für die Stegdrähte (22, 23) und gegebenenfalls auch die Längen der Vorschubwege gleichzeitig mit der Verschiebung der zugeordneten Stegdraht-Schweißeinrichtung (60) veränderbar sind.

**Revendications**

1. Procédé pour fabriquer des armatures en treillis soudées, qui se composent de deux nappes de treillage (3, 4) parallèles et planes en des fils longitudinaux et transversaux s'entrecroisant et soudés aux points de croisement, ainsi que de fils d'entretoisement (22, 23) rectilignes et raccourcis qui maintiennent les nappes de treillage à une distance mutuelle prédéterminée, et sont soudés à chaque extrémités avec un fil de l'une des deux nappes de treillage, caractérisé par le fait que deux nappes de treillage (2, 3) sont progressivement dévidées de bobines de réserve (1, 2), dressées, puis amenées à une position parallèle selon un espacement mutuel correspondant à l'épaisseur souhaitée de l'armature en treillis; et par le fait que plusieurs fils (22, 23) sont simultanément dévidés progressivement de bobines de réserve (20, 21), dressés, puis introduits par le côté en tant que fils d'entretoisement à travers l'une (3) des deux nappes de treillage (3, 4), dans l'espace intercalaire entre ces nappes de treillage, d'une manière telle que chaque fil d'entretoisement vienne se placer à proximité d'un fil de treillage des deux nappes de treillage (3, 4), après quoi les fils d'entretoisement sont soudés aux fils de treillage voisins et sont séparés de la réserve en fils, puis, pour finir, après la production d'un corps de treillis, une armature en treillis de longueur correspondante est séparée de ce corps de treillis.

2. Procédé selon la revendication 1, caractérisé par le fait que les fils d'entretoisement (22, 23) sont alternativement introduits dans l'espace intercalaire entre les nappes de treillage (3, 4) avec inclinaison dans des directions opposées, dans des plans s'étendant perpendiculairement aux plans des nappes de treillage (3, 4) dans lesquelles une rigidification du corps de treillis est souhaitée, puis sont soudés dans cette position inclinée aux nappes de treillage.

3. Procédé selon la revendication 1 ou 2, caractérisé par le fait qu'une plaque (50) en un matériau thermiquement isolant est introduite dans l'espace intercalaire entre les deux nappes de treillage parallèles (3, 4), à distance de chaque nappe de treillage, les tronçons extrêmes libres (51) des fils d'entretoisement (22, 23) étant enfoncés à travers cette plaque (50) lors de l'insertion desdits fils dans l'espace intercalaire (11) entre les nappes de treillage.

4. Procédé selon la revendication 3, caractérisé par le fait qu'au moins les parties extrêmes antérieures (51) des fils d'entretoisement (22, 23) sont chauffées avant de perforer la plaque (50) en matériau thermiquement isolant.

5. Dispositif pour la mise en oeuvre du procédé selon la revendication 1, caractérisé par deux bobines (1, 2) de réserve en nappes de treillage disposées des deux côtés d'une piste (11) de fabrication du corps de treillis, avec des dispositifs de dressage (5, 6) installés en aval, derriére lesquels se trouvent des dispositifs curvilignes (7, 8) directeurs des nappes de treillage (3, 4), qui débouchent tangentiellement dans des côtés longitudinaux opposés de la piste de fabrication (11); ainsi que par au moins un groupe de bobines (20, 21) de réserve en fils d'entretoisement disposé sur le côté de la piste de fabrication (11), bobines dont les trajectoires d'avance des fils, passant par des dispositifs de dressage (26, 27) et par des dispositifs (30, 31) d'avance des fils, fonctionnant en pas à pas et combinés à des cisailles (44, 45), s'étendent obliquement à travers la piste de fabrication, dispositif dans lequel sont respectivement prévues, au-delà de la piste de fabrication, des pinces de soudage (64, 65) coïncidant avec les trajectoires d'avance des fils et destinées à souder les extrémités libres des fils à l'une (4) des nappes de treillage; en deçà de la piste de fabrication, des pinces de soudage (68, 69) qui sont situées, dans la direction de fabrication, derrière les dispositifs d'avance (30, 31) combinés aux cisailles (44, 45), et sont destinées à souder à l'autre nappe de treillage (3) les extrémités sectionnées des fils raccourcis par lesdites cisailles (44, 45); et, enfin, derrière les pinces de soudage (68, 69) dans la direction de fabrication, des cisailles (80, 81) à fils longitudinaux pour débiter, du corps de treillis, des armatures en treillis de longueur souhaitée.

6. Dispositif selon la revendication 5, caractérisé par le fait que sont prévus deux groupes de bobines (20, 21) de réserve en fils d'entretoisement, dont des trajectoires d'avance des fils d'entretoisement, s'étendant à l'oblique dans des sens opposés par rapport au plan médian longitudinal et/ou au plan transversal de la piste de fabrication (11), s'étendent dans la piste de fabrication de préférence à partir du même côté de cette piste de fabrication.

7. Dispositif selon la revendication 5 ou 6, pour la mise en oeuvre de procédé selon la revendication 3, caractérisé par le fait qu'un canal (17) d'amenée d'un noyau isolant (50) est prévu entre les dispositifs (7, 8) directeurs des nappes de treillage, des cylindres d'avance (15, 16) étant de préférence disposés devant ce canal.

8. Dispositif selon la revendication 7, caractérisé par le fait que des dispositifs chauffants (28, 29) sont prévus dans les trajectoires d'avance des fils d'entretoisement.

9. Dispositif selon l'une des revendications 5 à 8, caractérisé par le fait qu'au moins les parties de ce dispositif situées d'un côté et à proximité du canal d'amenée (17) et de la piste de fabrication (11), par exemple un dispositif (8, 10) directeur et guideur de l'une (4) des nappes de treillage, un cylindre (16) d'avance d'un noyau isolant (50), un dipositif (60) de soudage des fils d'entretoisement, un dispositif (71) d'avance du corps de treillis, une cisaille (74) pour rogner ce corps et une cisaille (80) à fils longitudinaux des nappes de treillage, sont réglables conjointement, par exemple au moyen d'un support, perpendiculairement au plan médian longitudinal de la piste de fabrication (11).

10. Dispositif selon les revendications 6 et 9, caractérisé par le fait que les positions angulaires des dispositifs (30, 31) d'avance des fils d'entretoisement (22, 23), et éventuellement aussi les longueurs des courses d'avance, peuvent être modifiées simultanément au déplacement du dispositif associé (60) de soudage des fils d'entretoisement.

## Claims

1. A method of producing welded grid mats which consist of two parallel plane grid sheets (3, 4) having longitudinal and transverse wires crossing one another and welded together at the crossing points, and of straight spacer wires (22, 23) cut to length and welded at each end to one wire of a respective one of said two grid sheets, characterized in that two grid sheets (3, 4) are drawn off in steps from stock coils (1, 2) thereof, straightened and brought into position in parallel with one another at a distance apart corresponding with the desired thickness of said grid mat, and that simultaneously a number of wires (22, 23) are drawn off in steps from stock coils (20, 21) thereof, straightened and introduced as spacer wires laterally through one (3) of said two grid sheets (3, 4) into the gap therebetween, in such a way that each of said spacer wires comes to lie close to one grid wire of both said grid sheets (3, 4), whereupon said spacer wires are welded to said adjacent grid wires and severed from said wire stock, and finally after production of a grid body a grid mat of corresponding length is severed from said grid body.

2. A method according to claim 1, characterized in that said spacer wires (22, 23) are introduced into said gap between said grid sheets (3, 4) alternately obliquely in opposite senses in planes perpendicular to the planes of said grid sheets (3, 4) in which stiffening of said grid body is desired, and are welded in said oblique positions to said grid sheets.

3. A method according to claim 1 or 2, characterized in that a slab (50) of heat-insulating material is introduced into the gap between said two parallel grid sheets (3, 4), but spaced from each of said grid sheets, and the leading ends (51) of said spacer wires (22, 23), upon their introduction into said gap (11) between said grid sheets, are passed through said slab (50).

4. A method according to claim 3, characterized in that at least the leading end portions (51) of said spacer wires (22, 23) are heated before being passed through said slab (50) of heat-insulating material.

5. Apparatus for carrying out the method according to claim 1, characterized by two stock coil carriers (1, 2) for grid sheets located on either side of a channel (11) for production of a grid body, followed by respective straighter mechanisms (5, 6) and by curved guide devices (7, 8) for said grid sheets (3, 4) extending tangentially into opposite longitudinal sides of said production channel (11), as well as by at least one group of spacer wire stock coils (20, 21) positioned laterally of said production channel (11), wire feedways running from said spacer wire stock coils via straighter mechanisms (26, 27) and via step-wise operating wire advance means (30, 31) combined with shears (44, 45) transversely through said production channel (11), welding tongs (64, 65) on the opposite side of said production channel and in alignement with said wire feedways for welding the free wire to the one grid sheet (4), and welding tongs (68, 69) on the same side of said production channel as, and downstream in the direction of production along said advance means (30, 31) combined with shears (44, 45) for welding the ends of said wires cut by said shears (44, 45) onto the other grid sheet (3), and finally shears (80, 81) for the longitudinal wires located behind said welding tongs (68, 69) in the direction of production for cutting grid mats of a desired length from said grid body.

6. Apparatus according to claim 5, characterized in that two groups of spacer wire stock coils (20, 21) are provided, from which said spacer wire feedways run in opposite senses obliquely to the longitudinal central plane and/or the transverse plane of said production channel (11), preferably from the same side of said production channel, into said production channel.

7. Apparatus according to claim 5 or 6, for carrying out the method according to claim 3, characterized in that a supply channel (17) for an insulating core (50) is provided between said guide means (7, 8) for said grid sheets, advance rollers (15, 16) being preferably located in front of this channel.

8. Apparatus according to claim 7, characterized in that heater devices (28, 29) are provided on the spacer wire feedways.

9. Apparatus according to one of the claims 5 to 8, characterized in that at least those parts of the apparatus arranged on one side of said supply channel (17) and of said production channel (11) and close thereto, e.g. a guide and feed device (8, 10) for the one grid sheet (4), an advance roller (16) for an insulating core (50), a spacer wire-welding device (60), an advance device (71) for the grid body, a shear (74) for the same and a grid sheet-longitudinal wire shear (80) are adjustable in common, e.g. by means of a support, perpendicular to the longitudinal central plane of said production channel (11).

10. Apparatus according to claims 6 and 9, characterized in that the angular positions of said advance devices (30, 31) for said spacer wires (22, 23) and as the case may be also the lengths of the feedways are adjustable simultaneously when shifting the associated spacer wire-welding device (60).

**Fig. 1**

**Fig. 2**

30 (31)

**Fig. 4**

**Fig. 3**

50

51

4

71 (72)

**Fig. 5**

50

51

75

4

76

**Fig. 6**

73 (74)

51

3 (4)

80 (81)

**Fig. 7**

50

51

3 (4)

80 (81)

**Fig. 8**